# EUROPEAN PATENT APPLICATION

(11) **EP 4 751 944 A1**
(43) Date of publication of application: **03.06.2026**
(21) Application number: 25186988.9
(22) Date of filing: 02.07.2025
(51) Int. Cl.: B60G 7/00, B60G 11/16

(54) **LOWER ARM ASSEMBLY**

(30) Priority: 29.11.2024 KR 20240175477; 29.11.2024 KR 20240175478; 04.12.2024 KR 20240178655
(71) Applicant: Hyundai Mobis Co., Ltd., Gangnam-gu Seoul 06141 (KR)
(72) Inventor: YOON, Suk Jin, 16891 Yongin-si (KR); LEE, Kye Ho, 16891 Yongin-si (KR); LEE, Joon Min, 16891 Yongin-si (KR)
(74) Representative: Vossius & Partner Patentanwälte Rechtsanwälte mbB

(57) **Abstract**

A lower arm assembly includes a plate that extends along a first axis, a first leg connected to a bottom surface of the plate, and a second leg connected to the bottom surface of the plate and disposed symmetrically to the first leg in relation to the first axis.

## Description

### BACKGROUND

### TECHNICAL FIELD

Exemplary embodiments of the present disclosure relate to a lower arm assembly, and more particularly, to a lower arm assembly of a rear wheel for a vehicle.

### DISCUSSION OF THE BACKGROUND

In general, the suspension of a vehicle is an apparatus that prevents damage to a vehicle body or freight and improves ride comfort by preventing vibration or an impact from a road surface from being directly transferred to the vehicle body when the vehicle travels in the state in which a vehicle shaft and the vehicle body have been connected.

The suspension is basically divided into a front suspension and a rear suspension. A rear-wheel lower arm, that is, one of the links of the rear suspension, plays a role to support a lateral force of a vehicle and to support sprung mass coming from a spring.

The background technology of the present disclosure is disclosed in Korean Patent No. 10-0320498 (December 28, 2001, entitled "REAR SUSPENSION SYSTEM OF VEHICLE").

### SUMMARY

Various embodiments are directed to providing a lower arm assembly capable of stably supporting a lateral force of a vehicle and sprung mass.

In an embodiment, a lower arm assembly includes a plate that extends along a first axis, a first leg connected to a bottom surface of the plate, and a second leg connected to the bottom surface of the plate and disposed symmetrically to the first leg in relation to the first axis.

The plate may include a first plate disposed in parallel to the first axis, a second plate extended from one end of the first plate and slantly disposed upward with respect to the first axis, and a third plate extended from the other end of the second plate and slantly disposed upward with respect to the first axis.

The first leg may include a first central part connected to the first plate, a first outer connection part connected to the second plate, and a first inner connection part connected to the third plate. The second leg may include a second central part connected to the first plate and disposed in parallel to the first central part, a second outer connection part connected to the second plate and disposed in parallel to the first outer connection part, and a second inner connection part connected to the third plate and disposed in parallel to the first inner connection part.

Each of an interval between the first outer connection part and the second outer connection part and an interval between the first inner connection part and the second inner connection part may be smaller than an interval between the first central part and the second central part.

An interval between the first outer connection part and the second outer connection part may be smaller than an interval between the first inner connection part and the second inner connection part.

The first leg may include a first outer extension part disposed between the first central part and the first outer connection part and a first inner extension part disposed between the first central part and the first inner connection part. The second leg may include a second outer extension part disposed between the second central part and the second outer connection part and a second inner extension part disposed between the second central part and the second inner connection part.

The lower arm assembly may further include an outer recess configured to penetrate the second plate and disposed between the first leg and the second leg and an inner recess configured to penetrate the third plate and disposed between the first leg and the second leg.

The lower arm assembly may further include a spring pad connected to a top surface of the first plate.

The plate may further include an insertion hole that penetrates the first plate. The spring pad may include a first pad body seated on the top surface of the first plate and a second pad body extended from the first pad body and inserted into the insertion hole.

The plate may further include a fixing hole configured to penetrate the first plate and spaced apart from the insertion hole. The spring pad may further include a fixing member extended from the first pad body and inserted into the fixing hole.

A central axis of the insertion hole and the first axis may perpendicularly intersect at a crossing. The fixing hole may include a first fixing hole disposed on the first axis and a plurality of second fixing holes spaced apart from the first fixing hole in a cylindrical direction centering around the crossing.

The fixing member may include a first fixing member extended from the first pad body and inserted into the first fixing hole and a second fixing member extended from the first pad body and inserted into the second fixing hole.

The first fixing member may include a first fixing body extended from a bottom surface of the first pad body and a first hook disposed at the end of the first fixing body and configured to come into contact with the bottom surface of the first plate.

The lower arm assembly may further include an undercover disposed under the plate and configured to cover the first leg and the second leg and a fastening member configured to connect the plate and the undercover.

The undercover may include a cover body disposed to face the bottom surface of the plate and spaced apart from the plate and a first seating part configured to protrude from the cover body to the plate. The fastening member may include one or more fixing flanges configured to extend from the plate and to come into contact with the first seating part and a flange fixing member configured to fix the fixing flange to the first seating part.

The undercover may further include a second seating part configured to protrude from the cover body to the plate and spaced apart from the first seating part and a slot disposed on the second seating part. The fastening member may further include one or more insert flanges each configured to extend from the plate and inserted into the slot.

The fixing flange may be disposed to face the first seating part as the insert flange is inserted into the slot.

The number of insertion flanges may be greater than the number of fixing flanges.

The slot may include an opening disposed perpendicularly to the first direction. The insert flange may be inserted into the slot through the opening as the plate is moved in the first direction.

The slot may further include a stopper spaced apart from the opening in the first direction and disposed to face the end of the insert flange.

According to embodiments of the present disclosure, stable suspension performance can be embodied by distributing weight that is applied to the plate by the first leg and the second leg connected to the wheel and the vehicle body.

According to embodiments of the present disclosure, weight that is input from the outside can be supported more firmly because each of the interval between the first outer connection part and the second outer connection part and the interval between the first inner connection part and the second inner connection part is smaller than the interval between the first central part and the second central part.

According to embodiments of the present disclosure, the assembly direction of the lower arm assembly for the wheel and the vehicle body can be easily identified through a difference between the interval between the first inner connection part and the second inner connection part and the interval between the first outer connection part and the second outer connection part.

According to embodiments of the present disclosure, it is possible to reduce weight and costs and improve a production yield compared to the existing method of hot-forging an aluminum material because the plate, the first leg, and the third leg are manufactured by a method of extruding the aluminum material.

According to embodiments of the present disclosure, it is possible to effectively limit a horizontal movement and vertical movement of the spring pad by the second pad body inserted into the insertion hole and the fixing member inserted into the fixing hole.

According to embodiments of the present disclosure, it is possible to prevent a direction in which the spring pad is disposed from being misaligned because the number of first fixing holes and the number of second fixing holes are different on the basis of the second axis.

According to embodiments of the present disclosure, the undercover disposed on the lower side of the plate can be stably supported by the fastening member.

According to embodiments of the present disclosure, rapidness and efficiency of an assembly can be improved because the plate and the undercover are assembled by a slide method through the insert flange.

According to embodiments of the present disclosure, convenience of an assembly can be further improved because the number of insertion flanges is larger than the number of fixing flanges and thus the number of flange fixing members that requires a separate fastening process is relatively reduced.

### BRIEF DESCRIPTION OF THE DRAWINGS

FIG. 1 is a diagram schematically illustrating the state in which a lower arm assembly according to an embodiment of the present disclosure has been installed.
FIG. 2 is a perspective view schematically illustrating a construction of the lower arm assembly according to an embodiment of the present disclosure.
FIG. 3 is an exploded perspective view schematically illustrating a construction of the lower arm assembly according to an embodiment of the present disclosure.
FIG. 4 is a perspective view schematically illustrating a construction of a plate, a first leg, and a second leg according to the present embodiment.
FIG. 5 is a side view schematically illustrating a construction of the plate, the first leg, and the second leg according to the present embodiment.
FIG. 6 is a plan view schematically illustrating a construction of the plate, the first leg, and the second leg according to the present embodiment.
FIG. 7 is a bottom view schematically illustrating a construction of the plate, the first leg, and the second leg according to the present embodiment.
FIG. 8 is an enlarged view schematically illustrating a construction of an outer recess according to an embodiment of the present disclosure.
FIG. 9 is an enlarged view schematically illustrating a construction of an inner recess according to an embodiment of the present disclosure.
FIG. 10 is a cross-sectional perspective view schematically illustrating the state in which a spring pad according to an embodiment of the present disclosure has been installed.
FIG. 11 is a bottom perspective view schematically illustrating the state in which the spring pad according to an embodiment of the present disclosure has been installed.
FIG. 12 is a perspective view schematically illustrating a construction of the spring pad according to an embodiment of the present disclosure.
FIG. 13 is a bottom perspective view schematically illustrating a construction of the spring pad according to an embodiment of the present disclosure.
FIG. 14 is a perspective view schematically illustrating a construction of a guide member according to an embodiment of the present disclosure.
FIG. 15 is a front view schematically illustrating a construction of the guide member according to an embodiment of the present disclosure.
FIG. 16 is a perspective view schematically illustrating a construction of a lower arm assembly according to another embodiment of the present disclosure.
FIG. 17 is an exploded perspective view schematically illustrating a construction of the lower arm assembly according to another embodiment of the present disclosure.
FIG. 18 is a plan view schematically illustrating a construction of the lower arm assembly according to another embodiment of the present disclosure.
FIG. 19 is a cross-sectional view schematically illustrating a construction of a slot according to another embodiment of the present disclosure.
FIGS. 20 and 21 are diagrams schematically illustrating an assembly process of an undercover according to another embodiment of the present disclosure.

### DETAILED DESCRIPTION OF THE ILLUSTRATED EMBODIMENTS

Hereinafter, a lower arm assembly according to embodiments of the present disclosure is described with reference to the accompanying drawings.

In this process, the thicknesses of lines or the sizes of components illustrated in the drawings may have been exaggerated for the clarity of a description and for convenience' sake. Terms to be described below have been defined by taking into consideration their functions in the present disclosure, and may be changed depending on a user or operator's intention or practice. Accordingly, such terms should be defined based on the overall contents of this specification.

Furthermore, throughout the specification, when it is described that one part is "connected (or coupled)" to another part, the one part may be "directly connected (or coupled)" to the another part or may be "indirectly connected (or coupled)" to the another part with another member interposed therebetween. When it is said that one component "includes (or comprises)" the other component, this means that the one component may further "include (or comprise)" another component not the exclusion of another component unless explicitly described to the contrary.

Furthermore, throughout this specification, the same reference numerals may denote the same components. Although not mentioned or described in a specific drawing, the same reference numerals or similar reference numerals may be described on the basis of another drawing. Furthermore, although a reference numeral is not indicated in a portion of a specific drawing, the portion may be described on the basis of another drawing. Furthermore, the number, shapes, and sizes of detailed components included in the drawings of this application, a relative difference between the sizes, etc. have been set for convenience of understanding, and do not limit embodiments, and may be implemented in various forms.

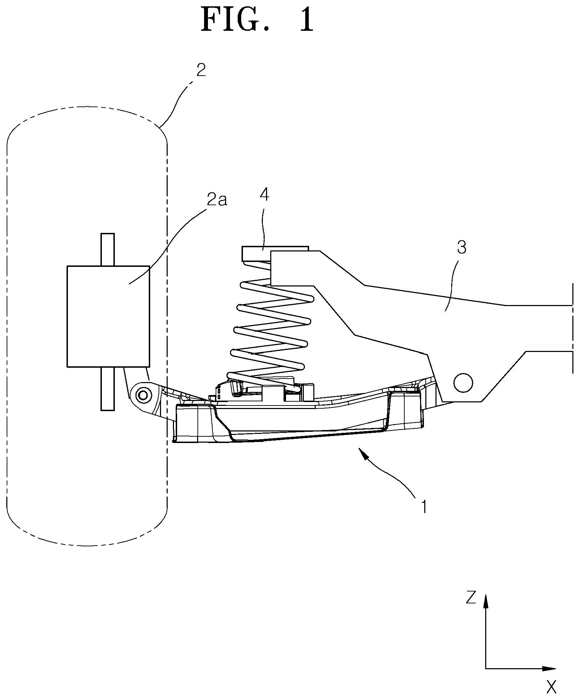

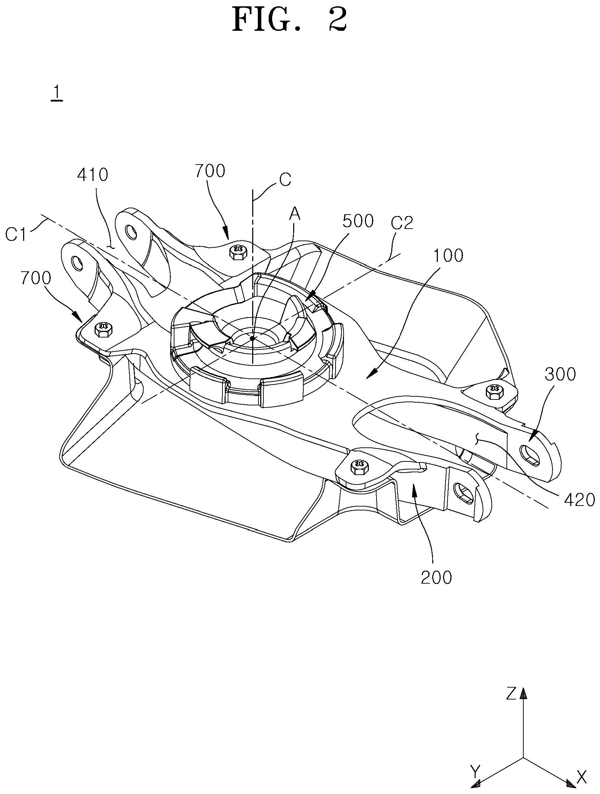

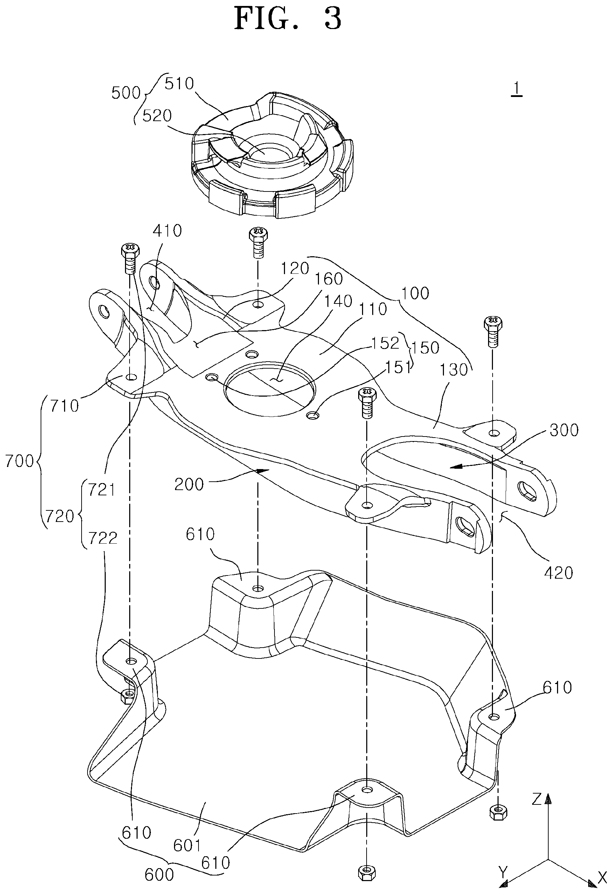

FIG. 1 is a diagram schematically illustrating the state in which a lower arm assembly according to an embodiment of the present disclosure has been installed. FIG. 2 is a perspective view schematically illustrating a construction of the lower arm assembly according to an embodiment of the present disclosure. FIG. 3 is an exploded perspective view schematically illustrating a construction of the lower arm assembly according to an embodiment of the present disclosure.

A wheel 2 described hereinafter may be exemplified as a rear wheel of a vehicle. A vehicle body 3 may be exemplified as various structures that form a structural frame of a vehicle like a subframe of a vehicle. Furthermore, the width direction of the vehicle may mean a direction parallel to an X axis on the basis of FIGS. 1 and 2. The length direction of the vehicle may be exemplified as a direction parallel to a Y axis on the basis of FIG. 2.

Referring to FIGS. 1 to 3, a lower arm assembly 1 according to the present embodiment includes a plate 100, a first leg 200, and a second leg 300.

The plate 100, the first leg 200, and the second leg 300 may each be made of an aluminum material. The plate 100, the first leg 200, and the second leg 300 may each be manufactured by an extrusion method. Accordingly, the lower arm assembly 1 according to the present embodiment can reduce weight and costs and improve a production yield compared to a case in which the lower arm assembly is formed by a method of hot-forging an aluminum material.

The plate 100 may extend along a first axis C1 and generally support the first leg 200 and the second leg 300. The plate 100 may be disposed between the wheel 2 and the vehicle body 3. A bottom surface of the plate 100 may be disposed toward the ground. A top surface of the plate 100 may be disposed toward a direction in which the plate becomes distant from the ground. In the present embodiment, the first axis C1 may mean the width direction of the vehicle, that is, any one straight line parallel to the X axis on the basis of FIGS. 1 and 2.

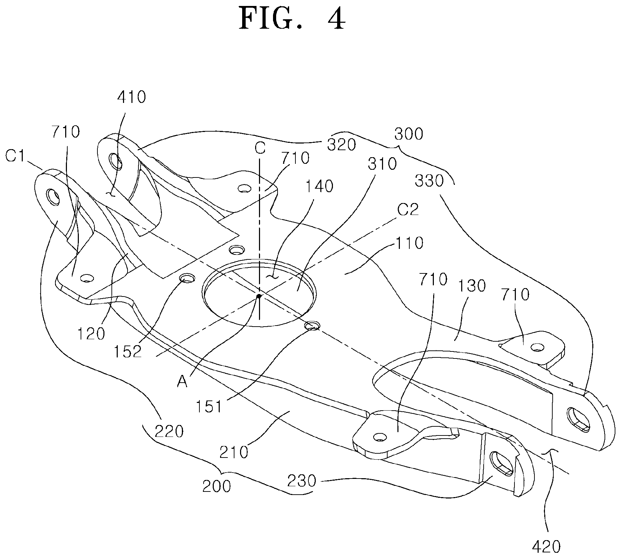

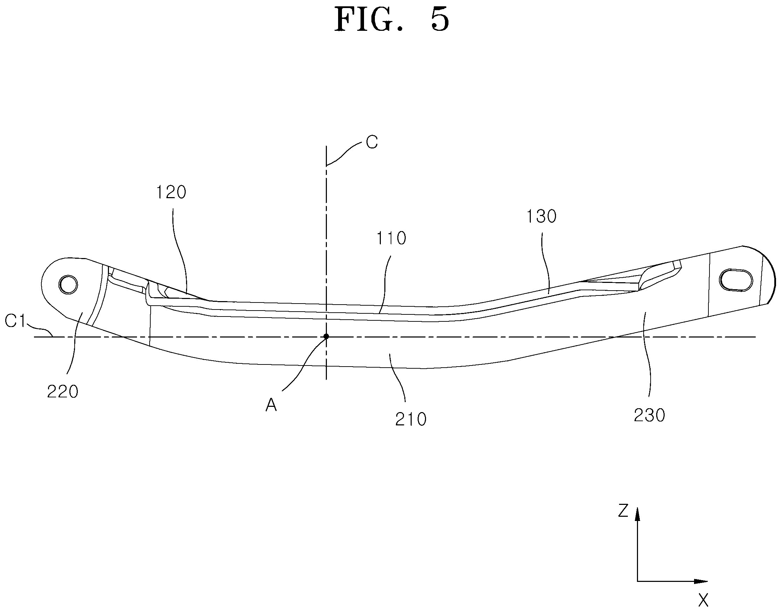

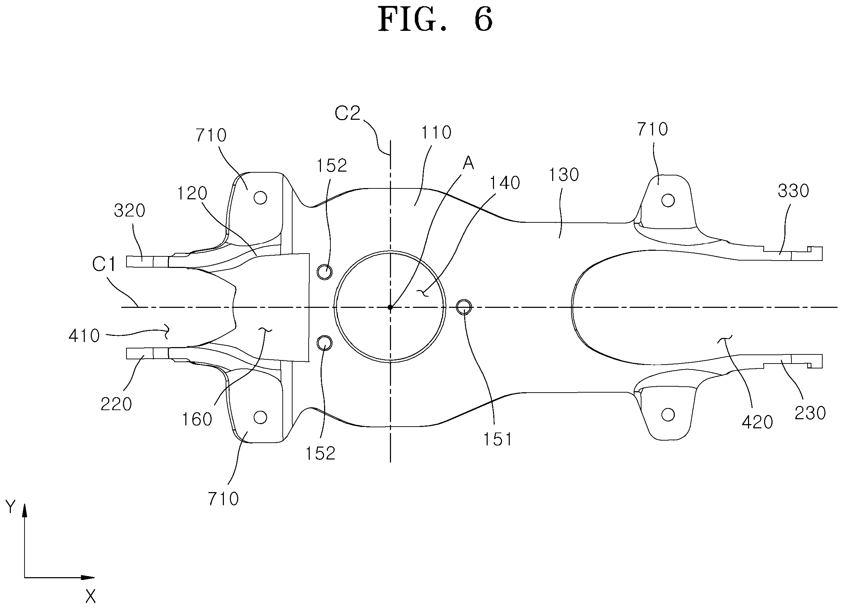

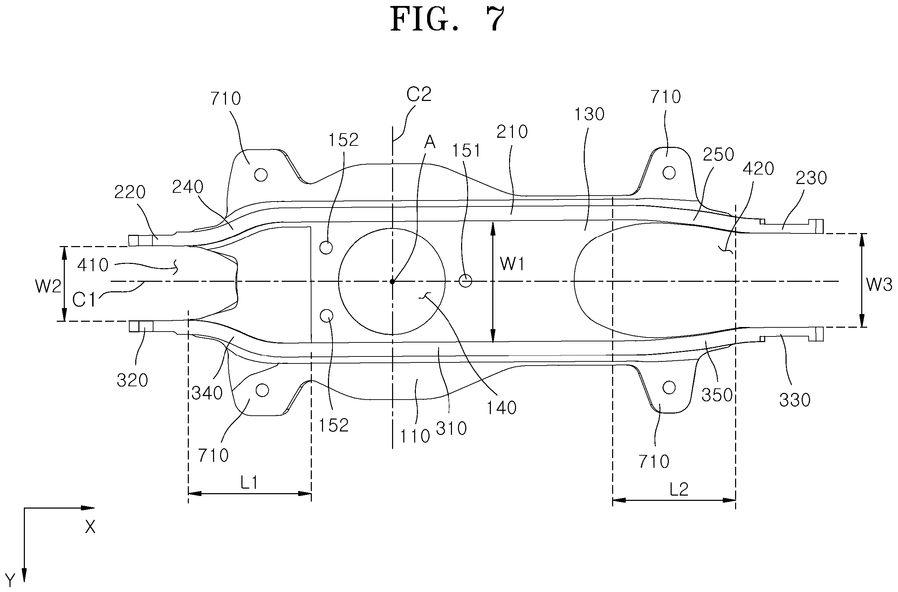

FIG. 4 is a perspective view schematically illustrating a construction of the plate, the first leg, and the second leg according to the present embodiment. FIG. 5 is a side view schematically illustrating a construction of the plate, the first leg, and the second leg according to the present embodiment. FIG. 6 is a plan view schematically illustrating a construction of the plate, the first leg, and the second leg according to the present embodiment. FIG. 7 is a bottom view schematically illustrating a construction of the plate, the first leg, and the second leg according to the present embodiment.

Referring to FIGS. 1 to 7, the plate 100 according to the present embodiment includes a first plate 110, a second plate 120, and a third plate 130.

The first plate 110 forms an appearance of a central part of the plate 100, and may support the second plate 120 and the third plate 130.

The first plate 110 according to the present embodiment may have a form of a flat panel that is disposed in parallel to the first axis C1. A bottom surface and top surface of the first plate 110 may be disposed in parallel to the ground.

The second plate 120 may extend from one end of the first plate 110.

The second plate 120 according to the present embodiment may have a form of a flat panel that extends from one end of the first plate 110 disposed to face the wheel 2 toward the wheel 2. The second plate 120 may be slantly disposed upward with respect to the first axis C1. For example, the second plate 120 may be disposed so that a distance from the ground is increased toward the end of the second plate. The tilt angle of the second plate 120 to the first axis C1 may be variously designed and changed depending on the location of the wheel 2.

The third plate 130 may extend from the other end of the first plate 110.

The third plate 130 according to the present embodiment may have a form of a flat panel that extends from the other end of the first plate 110 disposed to face the vehicle body 3 toward the vehicle body 3. The third plate 130 may be slantly disposed upward with respect to the first axis C1. For example, the third plate 130 may be disposed so that a distance from the ground is increased toward the end of the third plate. The tilt angle of the third plate 130 to the first axis C1 may be variously designed and changed depending on the location of the wheel 2. Accordingly, the plate 100 according to the present embodiment may have a form of a plate the location of a central part of which is relatively low and which is bent upward toward both ends of the plate.

The extension length of the third plate 130 may be greater than the extension length of the second plate 120. Accordingly, an interval between the first plate 110 and the wheel 2 may be smaller than an interval between the first plate 110 and the vehicle body 3.

The first leg 200 and the second leg 300 may be connected to the bottom surface of the plate 100. The first leg 200 and the second leg 300 may be disposed symmetrically on the basis of the first axis C1. For example, the first leg 200 and the second leg 300 may be disposed to be spaced apart from each other at a predetermined interval along a second axis C2 that is perpendicular to the first axis C1 with the first axis C1 interposed therebetween. The second axis C2 may mean a straight line that is parallel to the Y axis on the basis of FIG. 4 and that perpendicularly intersects the first axis C1 at a crossing A. The crossing A may be exemplified as an arbitrary point that is disposed within the first plate 110.

Both ends of each of the first leg 200 and the second leg 300 may be combined with the wheel 2 and the vehicle body 3, respectively. Accordingly, the first leg 200 and the second leg 300 may provide mechanical connections of the lower arm assembly 1 for the wheel 2 and the vehicle body 3.

The first leg 200 according to the present embodiment includes a first central part 210, a first outer connection part 220, and a first inner connection part 230.

The first central part 210 is connected to the first plate 110, and may form an appearance of a central part of the first leg 200.

The first central part 210 according to the present embodiment may protrude downward from the bottom surface of the first plate 110. The length of the first central part 210 may be greater than the length of the first plate 110. Accordingly, a central area of the first central part 210 may be disposed on the lower side of the first plate 110. Areas of the first central part 210 at both ends thereof may be disposed on the lower sides of the second plate 120 and the third plate 130, respectively. The central area of the first central part 210 may be disposed in parallel to the first plate 110. That is, the central area of the first central part 210 may be disposed in parallel to the first axis C1. The areas of the first central part 210 at both ends thereof may be disposed in parallel to the second plate 120 and the third plate 130, respectively. That is, the areas of the first central part 210 at both ends thereof may each be slantly disposed upward at a predetermined angle to the first axis C1.

The first outer connection part 220 is connected to the second plate 120, and may form an appearance of one end of the first leg 200.

The first outer connection part 220 according to the present embodiment may protrude downward from a bottom surface of the second plate 120. The length direction of the first outer connection part 220 may be disposed in parallel to the second plate 120. That is, the length direction of the first outer connection part 220 may be slantly disposed upward at a predetermined angle to the first axis C1. The first outer connection part 220 may be disposed to be spaced apart from one end of the first central part 210 at a predetermined interval L1.

The first outer connection part 220 may be combined with a knuckle 2a connected to the wheel 2. Accordingly, the first outer connection part 220 may provide a mechanical connection between the lower arm assembly 1 and the wheel 2. The first outer connection part 220 may be combined with the knuckle 2a by various types of combination methods, such as bolting, fitting, and pinning.

The first inner connection part 230 is connected to the third plate 130, and may form an appearance of the other end of the first leg 200.

The first inner connection part 230 according to the present embodiment may protrude downward from a bottom surface of the third plate 130. The length direction of the first inner connection part 230 may be disposed in parallel to the third plate 130. That is, the length direction of the first inner connection part 230 may be slantly disposed upward at a predetermined angle to the first axis C1. The first inner connection part 230 may be disposed to be spaced apart from the other end of the first central part 210 at a predetermined interval L2.

The first inner connection part 230 may be combined with the vehicle body 3. Accordingly, the first inner connection part 230 may provide a mechanical connection between the lower arm assembly 1 and the vehicle body 3. The first inner connection part 230 may be combined with the vehicle body 3 by various types of combination methods, such as bolting, fitting, and pinning.

The interval L1 between the first outer connection part 220 and the first central part 210 may be smaller than the interval L2 between the first inner connection part 230 and the first central part 210.

The first leg 200 according to the present embodiment may further include a first outer extension part 240 and a first inner extension part 250.

The first outer extension part 240 may connect one end of the first central part 210 and the first outer connection part 220.

The first outer extension part 240 according to the present embodiment may be disposed between the first central part 210 and the first outer connection part 220. The first outer extension part 240 may protrude downward from the bottom surface of the second plate 120. Both ends of the first outer extension part 240 may be connected to the first central part 210 and the first outer connection part 220, respectively.

The first inner extension part 250 may connect the first central part 210 and the first inner connection part 230.

The first inner extension part 250 according to the present embodiment may be disposed between the other end of the first central part 210 and the first inner connection part 230. The first inner extension part 250 may protrude downward from the bottom surface of the third plate 130. Both ends of the first inner extension part 250 may be connected to the first central part 210 and the first inner connection part 230.

The second leg 300 according to the present embodiment includes a second central part 310, a second outer connection part 320, and a second inner connection part 330.

The second central part 310 is connected to the first plate 110, and may form an appearance of a central part of the second leg 300.

The second central part 310 according to the present embodiment may protrude downward from the bottom surface of the first plate 110. The length of the second central part 310 may be greater than the length of the first plate 110. Accordingly, a central area of the second central part 310 may be disposed on the lower side of the first plate 110. Areas of the second central part 310 at both ends thereof may be disposed on the lower sides of the second plate 120 and the third plate 130, respectively. The central area of the second central part 310 may be disposed in parallel to the first plate 110. That is, the central area of the second central part 310 may be disposed in parallel to the first axis C1. The areas of the second central part 310 at both ends thereof may be disposed in parallel to the second plate 120 and the third plate 130, respectively. That is, the areas of the second central part 310 at both ends thereof may be slantly disposed upward at a predetermined angle to the first axis C1.

The second central part 310 may be disposed symmetrically to the first central part 210 on the basis of the first axis C1. The second central part 310 may be disposed in parallel to the first central part 210. The second central part 310 may be spaced apart from the first central part 210 at a predetermined interval W1 along the second axis C2.

The second outer connection part 320 is connected to the second plate 120, and may form an appearance of one end of the second leg 300.

The second outer connection part 320 according to the present embodiment may protrude downward from the bottom surface of the second plate 120. The length direction of the second outer connection part 320 may be disposed in parallel to the second plate 120. That is, the length direction of the second outer connection part 320 may be slantly disposed upward at a predetermined angle to the first axis C1. The second outer connection part 320 may be disposed to be spaced apart from one end of the second central part 310 at a predetermined interval. An interval between the second central part 310 and the second outer connection part 320 may be the same as the interval L1 between the first central part 210 and the first outer connection part 220.

The second outer connection part 320 may be combined with the knuckle 2a connected to the wheel 2. Accordingly, the second outer connection part 320 may provide a mechanical connection between the lower arm assembly 1 and the wheel 2. The second outer connection part 320 may be combined with the knuckle 2a by various types of combination methods, such as bolting, fitting, and pinning.

The second outer connection part 320 may be disposed symmetrically to the first outer connection part 220 on the basis of the first axis C1. The second outer connection part 320 may be disposed in parallel to the first outer connection part 220. The second outer connection part 320 may be spaced apart from the first outer connection part 220 at a predetermined interval W2 along the second axis C2.

The interval W2 between the first outer connection part 220 and the second outer connection part 320 may be smaller than the interval W1 between the first central part 210 and the second central part 310. Accordingly, the first outer connection part 220 and the second outer connection part 320 can support weight that is transferred from the wheel 2 more firmly.

The second inner connection part 330 is connected to the third plate 130, and may form an appearance of the other end of the first leg 200.

The second inner connection part 330 according to the present embodiment may protrude downward from the bottom surface of the third plate 130. The length direction of the second inner connection part 330 may be disposed in parallel to the third plate 130. That is, the length direction of the second inner connection part 330 may be slantly disposed upward at a predetermined angle to the first axis C1. The second inner connection part 330 may be disposed to be spaced apart from the other end of the second central part 310 at a predetermined interval. An interval between the second central part 310 and the second inner connection part 330 may be the same as the interval L2 between the first central part 210 and the first inner connection part 230.

The second inner connection part 330 may be combined with the vehicle body 3. Accordingly, the second inner connection part 330 may provide a mechanical connection between the lower arm assembly 1 and the vehicle body 3. The second inner connection part 330 may be combined with the vehicle body 3 by various types of combination methods, such as bolting, fitting, and pinning.

The second inner connection part 330 may be disposed symmetrically to the first inner connection part 230 on the basis of the first axis C1. The second inner connection part 330 may be disposed in parallel to the first inner connection part 230. The second inner connection part 330 may be spaced apart from the first inner connection part 230 at a predetermined interval W3 along the second axis C2.

The interval W3 between the first inner connection part 230 and the second inner connection part 330 may be smaller than the interval W1 between the first central part 210 and the second central part 310. Accordingly, the first inner connection part 230 and the second inner connection part 330 can support weight that is transferred from the vehicle body more firmly.

The interval W3 between the first inner connection part 230 and the second inner connection part 330 may be different from the interval W2 between the first outer connection part 220 and the second outer connection part 320. For example, the interval W2 between the first outer connection part 220 and the second outer connection part 320 may be smaller than the interval W3 between the first inner connection part 230 and the second inner connection part 330. Accordingly, a user can easily identify the assembly direction of the lower arm assembly 1 for the wheel 2 and the vehicle body 3 based on a difference between the interval W3 between the first inner connection part 230 and the second inner connection part 330 and the interval W2 between the first outer connection part 220 and the second outer connection part 320.

The second leg 300 according to the present embodiment may further include a second outer extension part 340 and a second inner extension part 350.

The second outer extension part 340 may connect one end of the second central part 310 and the second outer connection part 320.

The second outer extension part 340 according to the present embodiment may be disposed between the second central part 310 and the second outer connection part 320. Both ends of the second outer extension part 340 may be connected to the second central part 310 and the second outer connection part 320, respectively. The second outer extension part 340 may protrude downward from the bottom surface of the second plate 120. The second outer extension part 340 may be disposed symmetrically to the first outer extension part 240 on the basis of the first axis C1.

As the interval W2 between the first outer connection part 220 and the second outer connection part 320 is formed to be smaller than the interval W1 between the first central part 210 and the second central part 310, an interval between the first outer extension part 240 and the second outer extension part 340 may be reduced toward the first outer connection part 220 and the second outer connection part 320. That is, the first outer extension part 240 and the second outer extension part 340 may slantly extend from the first central part 210 and the second central part 310, respectively, toward the first axis C1 in a direction in which the first outer extension part 240 and the second outer extension part 340 become close to each other.

The second inner extension part 350 may connect the second central part 310 and the second inner connection part 330.

The second inner extension part 350 according to the present embodiment may be disposed between the other end of the second central part 310 and the second inner connection part 330. Both ends of the second inner extension part 350 may be connected to the second central part 310 and the second inner connection part 330. The second inner extension part 350 may protrude downward from the bottom surface of the third plate 130. The second inner extension part 350 may be disposed symmetrically to the first inner extension part 250 on the basis of the first axis C1.

As the interval W3 between the first inner connection part 230 and the second inner connection part 330 is formed to be smaller than the interval W1 between the first central part 210 and the second central part 310, an interval between the first inner extension part 250 and the second inner extension part 350 may be reduced toward the first inner connection part 230 and the second inner connection part 330. That is, the first inner connection part 230 and the second inner connection part 330 may slantly extend from the first central part 210 and the second central part 310, respectively, toward the first axis C1 in a direction in which the first inner connection part 230 and the second inner connection part 330 become close to each other.

As the interval W2 between the first outer connection part 220 and the second outer connection part 320 is formed to be smaller than the interval W3 between the first inner connection part 230 and the second inner connection part 330, the angle of the first outer connection part 220 to the first axis C1 may be greater than the angle of the first inner connection part 230 to the first axis C1. The angle of the second outer connection part 320 to the first axis C1 may be greater than the angle of the second inner connection part 330 to the first axis C1.

The lower arm assembly 1 according to the present embodiment may include an outer recess 410 and an inner recess 420.

The outer recess 410 penetrates the second plate 120, and may be disposed between the first leg 200 and the second leg 300. The outer recess 410 may function as a component that prevents the second plate 120 from interfering with a part around the wheel 2, such as the knuckle 2a, in a process of connecting the first leg 200 and the second leg 300 to the wheel 2 by deleting some area of the second plate 120.

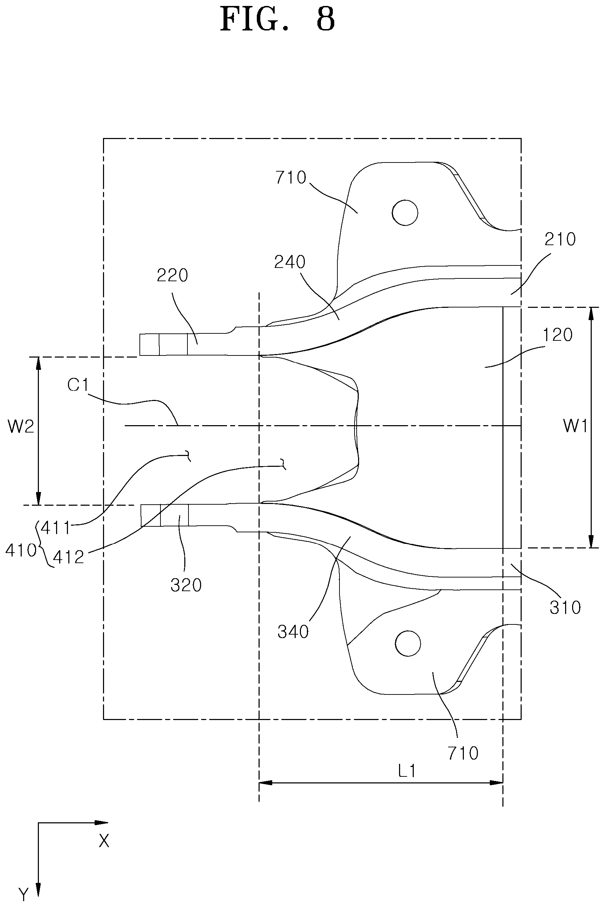

FIG. 8 is an enlarged view schematically illustrating a construction of the outer recess according to an embodiment of the present disclosure.

Referring to FIG. 8, the outer recess 410 according to the present embodiment may include a first outer recess 411 and a second outer recess 412.

The first outer recess 411 may be disposed between the first outer connection part 220 and the second outer connection part 320.

The first outer recess 411 according to the present embodiment may have a form of a hole that penetrates the top surface and bottom surface of the second plate 120 that is disposed between the first outer connection part 220 and the second outer connection part 320. The width of the first outer recess 411 may be the same as the interval W2 between the first outer connection part 220 and the second outer connection part 320 or may be smaller than the interval W2 between the first outer connection part 220 and the second outer connection part 320.

The second outer recess 412 may be disposed between the first outer extension part 240 and the second outer extension part 340.

The second outer recess 412 according to the present embodiment may have a form of a hole that penetrates the top surface and bottom surface of the second plate 120 that is disposed between the first outer extension part 240 and the second outer extension part 340. The second outer recess 412 may be connected to the first outer recess 411. The width of the second outer recess 412 may be increased toward the first outer recess 411.

The inner recess 420 penetrates the third plate 130, and may be disposed between the first leg 200 and the second leg 300. The inner recess 420 may function as a component that prevents the third plate 130 from interfering with a part around the vehicle body 3 in a process of connecting the first leg 200 and the second leg 300 to the vehicle body 3 by deleting some area of the third plate 130.

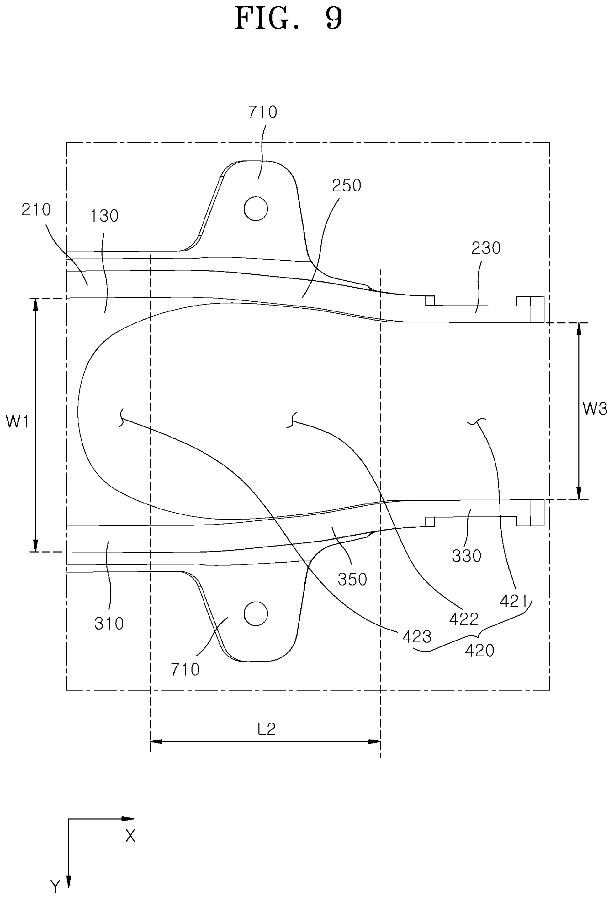

FIG. 9 is an enlarged view schematically illustrating a construction of the inner recess according to an embodiment of the present disclosure.

Referring to FIG. 9, the inner recess 420 according to the present embodiment may include a first inner recess 421, a second inner recess 422, and a third inner recess 423.

The first inner recess 421 may be disposed between the first inner connection part 230 and the second inner connection part 330.

The first inner recess 421 according to the present embodiment may have a form of a hole that penetrates the top surface and bottom surface of the third plate 130 that is disposed between the first inner connection part 230 and the second inner connection part 330. The width of the first inner recess 421 may be the same as the interval W3 between the first inner connection part 230 and the second inner connection part 330, or may be smaller than the interval W3 between the first inner connection part 230 and the second inner connection part 330.

The second inner recess 422 may be disposed between the first inner extension part 250 and the second inner extension part 350.

The second inner recess 422 according to the present embodiment may have a form of a hole that penetrates the top surface and bottom surface of the third plate 130 that is disposed between the first inner extension part 250 and the second inner extension part 350. The second inner recess 422 may be connected to the first inner recess 421. The width of the second inner recess 422 may be greater than the width of the first inner recess 421. Accordingly, the second inner recess 422 can prevent interference between a part that extends between the first leg 200 and the second leg 300 from the vehicle body 3 and the third plate 130 more effectively.

The third inner recess 423 may be disposed between the first central part 210 and the second central part 310.

The third inner recess 423 according to the present embodiment may have a form of a hole that penetrates the top surface and bottom surface of the third plate 130 that is disposed between the first central part 210 and the end of the second central part 310. The third inner recess 423 may be connected to the second inner recess 422. That is, the first inner recess 421, the second inner recess 422, and the third inner recess 423 may be sequentially connected in the length direction of the third plate 130. The width of the third inner recess 423 may be increased toward the second inner recess 422.

The lower arm assembly 1 according to the present embodiment may further include a spring pad 500.

The spring pad 500 may be connected to the top surface of the plate 100. The spring pad 500 may function as a component that supports a spring 4 on the plate 100. For example, the spring pad 500 may be connected to the top surface of the first plate 110. Accordingly, the spring pad 500 can support the spring 4 more stably by maintaining the state in which the spring pad 500 is parallel to the first axis C1.

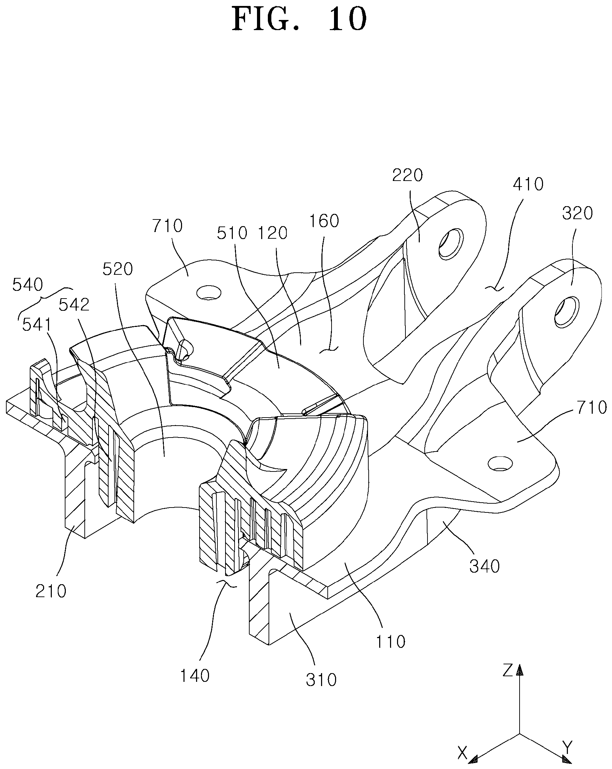

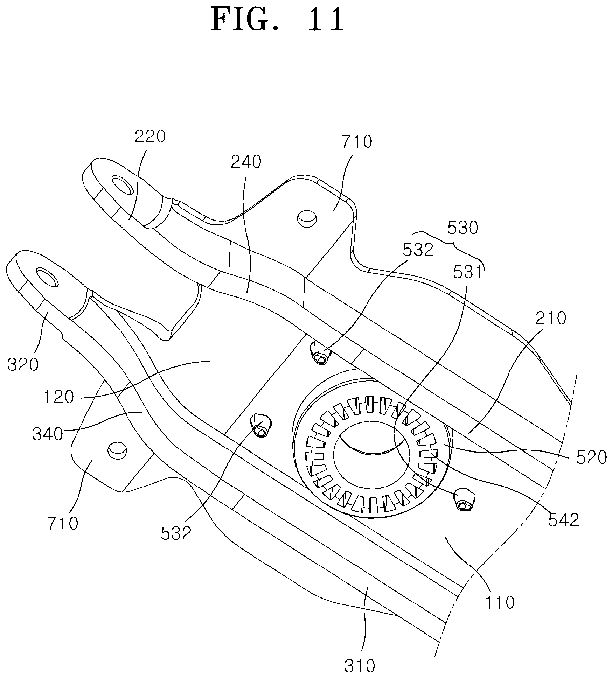

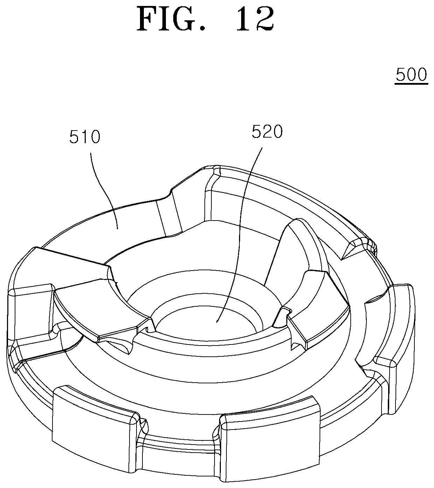

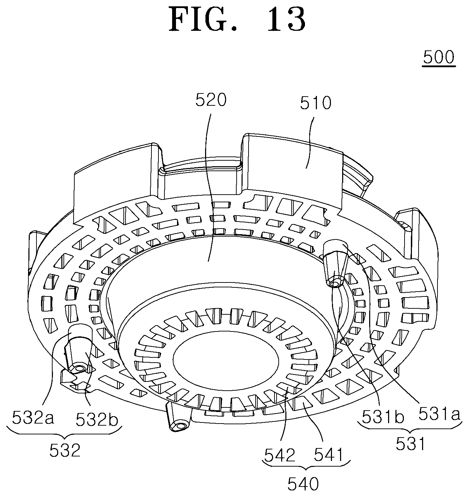

FIG. 10 is a cross-sectional perspective view schematically illustrating the state in which the spring pad according to an embodiment of the present disclosure has been installed. FIG. 11 is a bottom perspective view schematically illustrating the state in which the spring pad according to an embodiment of the present disclosure has been installed. FIG. 12 is a perspective view schematically illustrating a construction of the spring pad according to an embodiment of the present disclosure. FIG. 13 is a bottom perspective view schematically illustrating a construction of the spring pad according to an embodiment of the present disclosure.

Referring to FIGS. 10 to 13, the spring pad 500 according to the present embodiment may include a first pad body 510 and a second pad body 520.

The first pad body 510 may be disposed on the first plate 110. A bottom surface of the first pad body 510 may be seated on the top surface of the first plate 110. The bottom of the spring 4 may be seated on a top surface of the first pad body 510. A detailed shape of the first pad body 510 is not limited to the shapes illustrated in FIGS. 10 to 13, and may be designed and changed in various forms in which the first pad body can support the spring 4.

The second pad body 520 extends from the first pad body 510, and may limit a movement of the first pad body 510 for the plate 100.

The plate 100 according to the present embodiment may further include an insertion hole 140 that penetrates the first plate 110 for a connection with the second pad body 520.

The insertion hole 140 according to the present embodiment may have a form of a hole that perpendicularly penetrates the top surface and bottom surface of the first plate 110. The insertion hole 140 may have a circular cross section. The central axis C of the insertion hole 140 may be disposed to perpendicularly intersect the first axis C1 and the second axis C2 at the crossing A. The area of the insertion hole 140 may be formed to be smaller than the area of the first pad body 510.

The second pad body 520 according to the present embodiment is extended downward from the bottom surface of the first pad body 510, and may be inserted into the insertion hole 140. The second pad body 520 may have an approximately cylindrical shape. The central axis of the second pad body 520 may be disposed to be placed on the same axis as the central axis of the insertion hole 140. The outer circumferential surface of the second pad body 520 may come into contact with the inner circumferential surface of the first plate 110 that is disposed to surround the insertion hole 140. Accordingly, the second pad body 520 can prevent the first pad body 510 from moving in a direction perpendicular to the central axis C of the insertion hole 140 on the first plate 110.

The second pad body 520 that protrudes to the lower side of the first plate 110 may be disposed between the first leg 200 and the second leg 300, more specifically, between the first central part 210 and the second central part 310.

The spring pad 500 according to the present embodiment may further include a fixing member 530.

The fixing member 530 extends from the first pad body 510, and may function as a component that limits a movement of the first pad body 510 along with the second pad body 520. For example, the second pad body 520 may limit a movement of the first pad body 510 in a direction perpendicular to the central axis C of the insertion hole 140. The fixing member 530 may limit a movement of the first pad body 510 in a direction parallel to the central axis C of the insertion hole 140.

The plate 100 according to the present embodiment may further include a fixing hole 150 for a connection with the fixing member 530.

The fixing hole 150 penetrates the first plate 110, and may be disposed to be spaced apart from the insertion hole 140.

The fixing hole 150 according to the present embodiment may include a first fixing hole 151 and a second fixing hole 152.

The first fixing hole 151 and the second fixing hole 152 may each have a form of a hole that perpendicularly penetrates the top surface and bottom surface of the first plate 110. A cross section of each of the first fixing hole 151 and the second fixing hole 152 may be smaller than a cross section of the insertion hole 140. The first fixing hole 151 and the second fixing hole 152 may be the same or may be different from each other.

The first fixing hole 151 and the second fixing hole 152 may be arranged along the circumference of the insertion hole 140. More specifically, the first fixing hole 151 and the second fixing hole 152 may be disposed to be spaced apart from each other in a cylindrical direction centering around the crossing A. A distance from the crossing A to the central axis of the first fixing hole 151 may be the same as a distance from the crossing A to the central axis of the second fixing hole 152.

The first fixing hole 151 and the second fixing hole 152 may be disposed on both sides of the second axis C2, respectively. That is, the first fixing hole 151 may be disposed on one side of the first plate 110 that is divided on the basis of the second axis C2. The second fixing hole 152 may be disposed on the other side of the first plate 110 that is divided on the basis of the second axis C2.

The first fixing hole 151 according to the present embodiment may be disposed between the insertion hole 140 and the inner recess 420. The first fixing hole 151 may be disposed on the first axis C1. That is, the central axis of the first fixing hole 151 may be disposed to intersect the first axis C1 at one point.

The second fixing hole 152 according to the present embodiment may be disposed between the insertion hole 140 and the outer recess 410.

The second fixing hole 152 may be formed in a plural number. The plurality of second fixing holes 152 may be disposed symmetrically on the basis of the first axis C1. That is, the plurality of second fixing holes 152 may be disposed to be spaced apart from each other at predetermined intervals along the second axis C2 with the first axis C1 interposed therebetween.

For example, the second fixing hole 152 may be form as a pair. An angle between the pair of second fixing holes 152 formed centering around the crossing A may be smaller than an angle between the second fixing hole 152 and the first fixing hole 151 formed centering around the crossing A. Accordingly, the first fixing hole 151 and the second fixing hole 152 may be disposed on both sides of the second axis C2 on the basis of the second axis C2.

The fixing member 530 according to the present embodiment may include a first fixing member 531 and a second fixing member 532.

The first fixing member 531 extends from the first pad body 510, and may be inserted into the first fixing hole 151.

The first fixing member 531 according to the present embodiment may include a first fixing body 531a and a first hook 531b.

The first fixing body 531a may have a form of a pole that extends downward from the bottom surface of the first pad body 510. A cross section of the first fixing body 531a may be smaller than the cross section of the first fixing hole 151 or may be the same as the cross section of the first fixing hole 151. The first fixing body 531a may be inserted into the first fixing hole 151 as the first pad body 510 is seated on the top surface of the first plate 110.

The first hook 531b can prevent the first fixing body 531a from breaking away from the first fixing hole 151.

The first hook 531b according to the present embodiment may be disposed at the end of the first fixing body 531a. A cross section of the first hook 531b may be greater than the cross section of the first fixing hole 151. As the first fixing body 531a is inserted into the first fixing hole 151, the first hook 531b may come into contact with the bottom surface of the first plate 110.

The first hook 531b may be formed to have the cross section reduced toward the end of the first hook 531b. The cross section of the end of the first hook 531b may be smaller than the cross section of the first fixing hole 151. The first hook 531b may be provided to be elastically deformable. Accordingly, the first hook 531b can be easily inserted into the first fixing hole 151 by elastic deformation when the first fixing body 531a is inserted into the first fixing hole 151, can return to its initial form after protruding to the lower side of the first plate 110, and can prevent the breakaway of the first fixing body 531a.

The second fixing member 532 extends from the first pad body 510, and may be inserted into the second fixing hole 152. The number of second fixing members 532 may correspond to the number of second fixing holes 152. For example, as the second fixing holes 152 are formed as a pair, the second fixing members 532 may be formed as a pair. The number of first fixing holes 151 and the number of second fixing holes 152 may be different from each other on the basis of the second axis C2. As the number of first fixing members 531 inserted into the first fixing holes 151 and the number of second fixing members 532 inserted into the second fixing holes 152 are also different from each other, the lower arm assembly 1 according to the present embodiment can prevent a direction in which the spring pad 500 is disposed from being misaligned as if the second fixing member 532 is inserted into the first fixing hole 151.

The second fixing member 532 according to the present embodiment may include a second fixing body 532a and a second hook 532b.

The second fixing body 532a may have a form of a pole that extends downward from the bottom surface of the first pad body 510. The second fixing body 532a may be spaced apart from the first fixing body 531a at a predetermined angle in a cylindrical direction centering around the central axis of the first pad body 510. A cross section of the second fixing body 532a may be smaller than the cross section of the second fixing hole 152 or may be the same as the cross section of the second fixing hole 152. As the first pad body 510 is seated on the top surface of the first plate 110, the second fixing body 532a may be inserted into the second fixing hole 152.

The second hook 532b can prevent the second fixing body 532a from breaking away from the second fixing hole 152.

The second hook 532b according to the present embodiment may be disposed at the end of the second fixing body 532a. A cross section of the second hook 532b may be greater than the cross section of the second fixing hole 152. As the second fixing body 532a is inserted into the second fixing hole 152, the second hook 532b may come into contact with the bottom surface of the first plate 110.

The second hook 532b may be formed to have the cross section reduced toward the end of the second hook 532b. The cross section of the end of the second hook 532b may be smaller than the cross section of the second fixing hole 152. The second hook 532b may be provided to be elastically deformable. Accordingly, the second hook 532b can be easily inserted into the second fixing hole 152 when the second fixing body 532a is inserted into the second fixing hole 152, can return to its initial form after protruding to the lower side of the first plate 110, and can prevent the breakaway of the second fixing body 532a.

The spring pad 500 according to the present embodiment may further include a groove 540.

The groove 540 may be concavely formed into at least any one of the first pad body 510 and the second pad body 520. The groove 540 may function as a component that reduces overall weight of the spring pad 500 by deleting some area of the spring pad 500. Hereinafter, an example in which the groove 540 is formed in both the first pad body 510 and the second pad body 520 is described. However, the groove 540 is not limited to the example, and may be formed only in the first pad body 510 or the second pad body 520.

The groove 540 according to the present embodiment may include a first groove 541 and a second groove 542.

The first groove 541 may be concavely formed into the first pad body 510.

The first groove 541 according to the present embodiment may have a form of a groove that is concavely depressed upward from the bottom surface of the first pad body 510. The first groove 541 may be provided in a plural number. The plurality of first grooves 541 may be disposed to be spaced apart from each other within the first pad body 510. The number and arrangement form of the first grooves 541 are not limited to the number and the arrangement form illustrated in FIG. 13, and may be variously designed and changed.

The second groove 542 may be concavely formed into the second pad body 520.

The second groove 542 according to the present embodiment may have a form of a groove that is concavely depressed upward from a bottom surface of the second pad body 520. The second groove 542 may be provided in a plural number. The plurality of second grooves 542 may be disposed to be spaced apart from each other within the second pad body 520. The number and arrangement form of the second groove 542 are not limited to the number and the arrangement form illustrated in FIG. 13, and may be variously designed and changed.

The spring pad 500 according to the present embodiment may further include a guide member 550.

The guide member 550 may provide guidance to the assembly direction of the spring pad 500 for the plate 100.

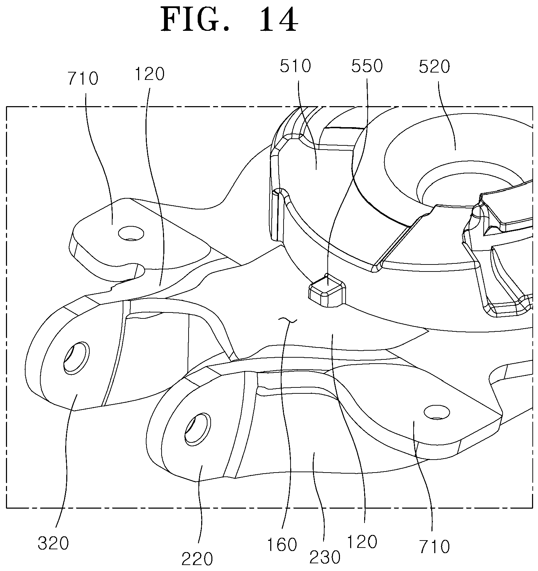

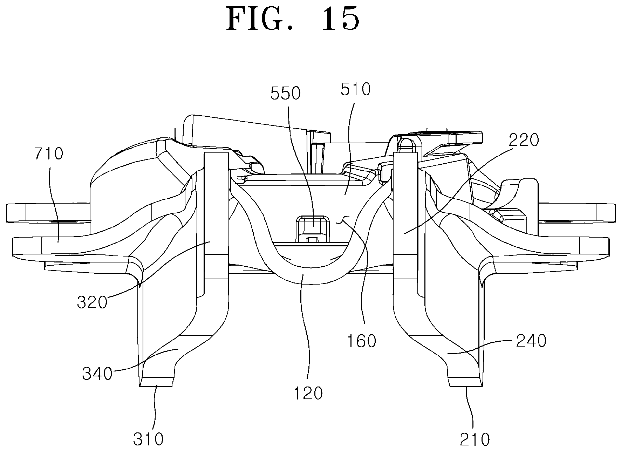

FIG. 14 is a perspective view schematically illustrating a construction of the guide member according to an embodiment of the present disclosure. FIG. 15 is a front view schematically illustrating a construction of the guide member according to an embodiment of the present disclosure.

Referring to FIGS. 14 and 15, the plate 100 according to the present embodiment may further include a guide groove 160.

The guide groove 160 may function as a component that provides a connection between the plate 100 and the guide member 550.

The guide groove 160 according to the present embodiment may have a form of a groove that is concavely formed downward from the top surface of the second plate 120. The guide groove 160 may be disposed between the first outer connection part 220 and the second outer connection part 320.

The guide member 550 according to the present embodiment may protrude from the outer circumferential surface of the first pad body 510 to the radial direction of the first pad body 510. As the first pad body 510 is seated on the top surface of the first plate 110, the guide member 550 may be inserted into the guide groove 160. Accordingly, a user can primarily align the assembly direction of the spring pad 500 by aligning the guide member 550 and the guide groove 160 in the assembly process of the plate 100 and the spring pad 500.

The lower arm assembly 1 according to the present embodiment may further include an undercover 600 and a fastening member 700.

The undercover 600 is disposed under the plate 100, and may cover the first leg 200 and the second leg 300. The undercover 600 may function as a component that protects the plate 100, the first leg 200, and the second leg 300 against an alien substance that is scattered from a road surface and that improves fuel efficiency by reducing air resistance when a vehicle travels.

The undercover 600 according to the present embodiment may include a cover body 601 and a first seating part 610.

The cover body 601 forms a schematic appearance of the undercover 600, and may support the first seating part 610.

The cover body 601 according to the present embodiment may be disposed between the plate 100 and the ground. A top surface of the cover body 601 may be disposed to face the bottom surface of the plate 100 by being spaced apart from the bottom surface of the plate 100 at a predetermined interval. The top surface of the cover body 601 may be disposed to surround the first leg 200 and the second leg 300. A shape of the cover body 601 is not limited to the shape illustrated in FIG. 3, and may be designed and changed in various forms in which the cover body 601 is disposed to face the bottom surface of the plate 100 and can cover the first leg 200 and the second leg 300.

The first seating part 610 may function as a component that provides a location at which the fastening member 700 is seated in the undercover 600.

The first seating part 610 according to the present embodiment may protrude from the cover body 601 toward the plate 100. A shape of the first seating part 610 is not limited to the shape illustrated in FIG. 3, and may be variously designed and changed within a range in which the first seating part 610 can support the fastening member 700.

The first seating part 610 may be provided in a plural number. The plurality of first seating parts 610 may be disposed to be spaced apart from each other along the circumference of the cover body 601. Four first seating parts 610 may be formed, for example. Each of the four first seating parts 610 may be individually disposed on each edge side of the cover body 601. However, the number and arrangement form of the first seating parts 610 are not limited to the example, and may be variously designed and changed.

The fastening member 700 may connect the plate 100 and the undercover 600.

The fastening member 700 according to the present embodiment may include a fixing flange 710 and a flange fixing member 720.

The fixing flange 710 extends from the plate 100, and may come into contact with the first seating part 610.

The fixing flange 710 according to the present embodiment may have a form of a plate that extends from the side of the plate 100 to the outside of the plate 100. A bottom surface of the fixing flange 710 may come into contact with a top surface of the first seating part 610.

The fixing flange 710 may be provided in a plural number. The plurality of fixing flanges 710 may individually come into contact with different top surfaces of the first seating part 610.

The flange fixing member 720 may fix the fixing flange 710 to the first seating part 610. The flange fixing member 720 may function as a component that prevents a movement of the undercover 600 for the plate 100 by mechanically fixing the fixing flange 710 and the first seating part 610.

The flange fixing member 720 according to the present embodiment may include a fixing bolt 721 and a fixing nut 722.

The fixing bolt 721 may penetrate the first seating part 610 and the fixing flange 710.

The fixing bolt 721 according to the present embodiment may have a form of a bolt screw in which a screw thread has been formed in the outer circumferential surface thereof. The bottom of the fixing bolt 721 penetrates the first seating part 610 and the fixing flange 710, and may protrude to the lower side of the first seating part 610. The bottom of the fixing bolt 721 is formed to have a form of a common bolt head, and may come into contact with a top surface of the fixing flange 710. Instead, the fixing bolt 721 may be integrally combined within the fixing flange 710.

The fixing nut 722 is combined with the fixing bolt 721, and can prevent the fixing bolt 721 from breaking away from the first seating part 610 and the fixing flange 710.

The fixing nut 722 according to the present embodiment may be formed in a form of a common nut screw or blind nut in which a screw thread has been formed in the inner circumferential surface thereof. The fixing nut 722 may be disposed on the lower side of the first seating part 610. The fixing nut 722 may be combined with a screw at the end of the fixing bolt 721 that protrudes to the lower side of the first seating part 610. The fixing nut 722 comes into contact with a bottom surface of the first seating part 610, and may limit a movement of the fixing bolt 721 in the axial direction thereof.

Hereinafter, a lower arm assembly 1' according to another embodiment of the present disclosure is described.

The lower arm assembly 1' according to the present embodiment may be constructed differently from the lower arm assembly 1 according to an embodiment of the present disclosure only in detailed constructions of the undercover 600 and the fastening member 700.

Accordingly, in describing the lower arm assembly 1' according to the present embodiment, only the detailed constructions of the undercover 600 and the fastening member 700, which are different from those of the lower arm assembly 1 according to an embodiment of the present disclosure, are described.

The description of the lower arm assembly 1 according to an embodiment of the present disclosure may be applied to the remaining components of the lower arm assembly 1' according to the present embodiment without any change.

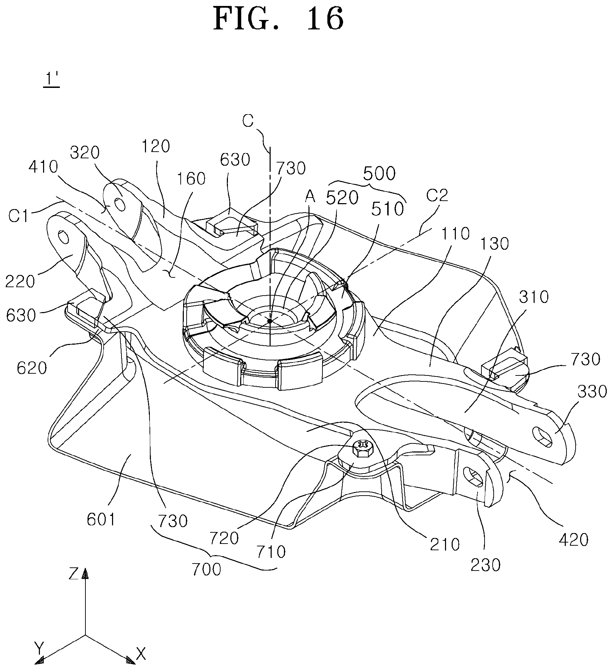

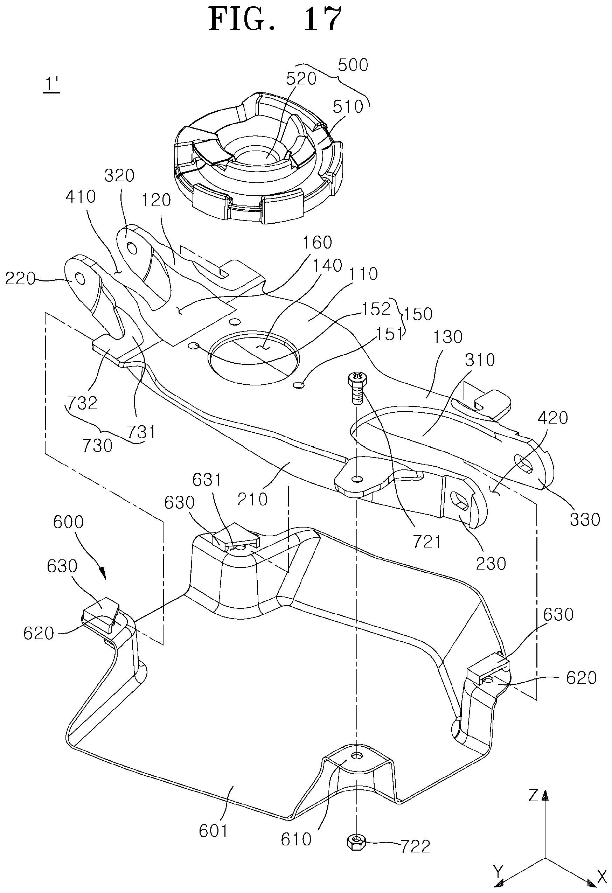

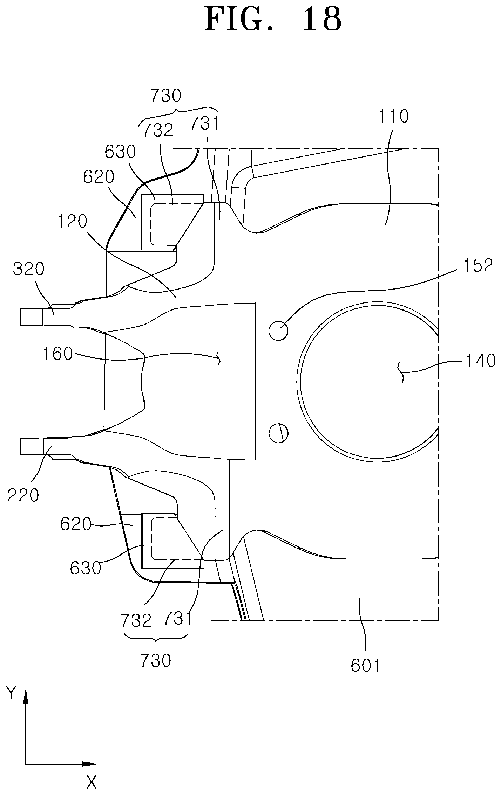

FIG. 16 is a perspective view schematically illustrating a construction of the lower arm assembly according to another embodiment of the present disclosure. FIG. 17 is an exploded perspective view schematically illustrating a construction of the lower arm assembly according to another embodiment of the present disclosure. FIG. 18 is a plan view schematically illustrating a construction of the lower arm assembly according to another embodiment of the present disclosure.

Referring to FIGS. 16 to 18, the undercover 600 according to the present embodiment may further include a second seating part 620 and a slot 630.

The second seating part 620 is spaced apart from the first seating part 610, and may protrude from the cover body 601 to the plate 100. The lower arm assembly 1' according to the present embodiment may be constructed in a form in which some first seating parts 610, among the plurality of first seating parts 610, have been substituted with the second seating parts 620 in the lower arm assembly 1 according to an embodiment of the present disclosure.

The second seating part 620 may be provided in a plural number. The plurality of second seating parts 620 may be disposed to be spaced apart from along the circumference of the cover body 601.

The number of second seating parts 620 may be greater than the number of first seating parts 610. For example, in the present embodiment, the number of second seating parts 620 may be 3 and the number of first seating parts 610 may be 1. However, the number of first seating parts 610 and the number of second seating parts 620 are not limited thereto, and the second seating parts 620 may be variously designed and changed within a range in which the number of second seating parts 620 is greater than the number of first seating parts 610.

The slot 630 may be disposed on the second seating part 620.

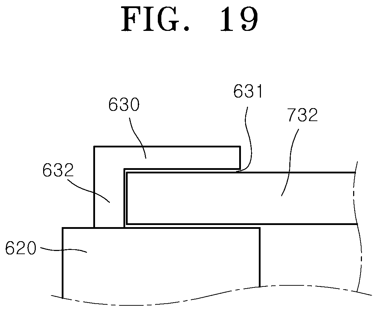

FIG. 19 is a cross-sectional view schematically illustrating a construction of the slot according to another embodiment of the present disclosure.

Referring to FIGS. 16 to 19, the slot 630 according to the present embodiment protrudes upward from a top surface of the second seating part 620, and may have a box form having the inside emptied. An opening 631 through which the internal space of the slot 630 and the external space of the slot 630 communicate with each other may be formed on one surface of the slot 630. The opening 631 may be disposed perpendicularly to a first direction. In the present embodiment, the first direction may be exemplified as a direction that is parallel to the first axis C1 and directed from the first plate 110 to the second plate 120.

The slot 630 may be provided in a plural number. The plurality of slots 630 may be individually disposed on different second seating parts 620.

The fastening member 700 according to the present embodiment may further include an insert flange 730.

The insert flange 730 extends from the plate 100, and may be inserted into the slot 630. The insert flange 730 may be inserted into the slot 630 through the opening 631 as the plate 100 is moved in the first direction on the undercover 600. Accordingly, the lower arm assembly 1' according to the present embodiment can improve efficiency of an assembly because the plate 100 and the undercover 600 can be primarily assembled by a slide method.

The insert flange 730 may be provided in a plural number. The plurality of insert flanges 730 may be individually inserted within different slots 630. The number of insert flanges 730 may be greater than the number of fixing flanges 710. For example, in the present embodiment, the number of insert flanges 730 may be 3 and the number of fixing flanges 710 may be 1. Accordingly, the fastening member 700 according to the present embodiment can further improve convenience of an assembly by relatively reducing the number of flange fixing members 720 that requires a separate fastening process.

The insert flange 730 according to the present embodiment may include a first flange body 731 and a second flange body 732.

The first flange body 731 is connected to the side of the plate 100, and may support the second flange body 732.

The first flange body 731 according to the present embodiment may extend from the side of the plate 100 to the outside of the plate 100.

The second flange body 732 extends from the first flange body 731, and may be disposed in parallel to the first direction.

The second flange body 732 according to the present embodiment is bent from the end of the first flange body 731 that protrudes to the outside of the plate 100, and may extend in the first direction. The second flange body 732 may be inserted into the slot 630 through the opening 631 as the plate 100 is moved in the first direction on the undercover 600.

The slot 630 according to the present embodiment may further include a stopper 632.

The stopper 632 may limit the insertion distance of the insert flange 730 for the slot 630.

The stopper 632 according to the present embodiment may be exemplified as a rear wall of the slot 630 that is spaced apart from the opening 631 in the first direction. As the insert flange 730 is inserted into the slot 630, the stopper 632 may be disposed to face the end of the insert flange 730, more specifically, the end of the second flange body 732. As the second flange body 732 is moved within the slot 630 by a set distance or more, the stopper 632 may come into contact with the end of the second flange body 732 and limit a movement of the insert flange 730. Accordingly, the stopper 632 according to the present embodiment can secure the consistency of the assembly of the plate 100 and the undercover 600 by constantly maintaining timing at which the insertion of the insert flange 730 is completed.

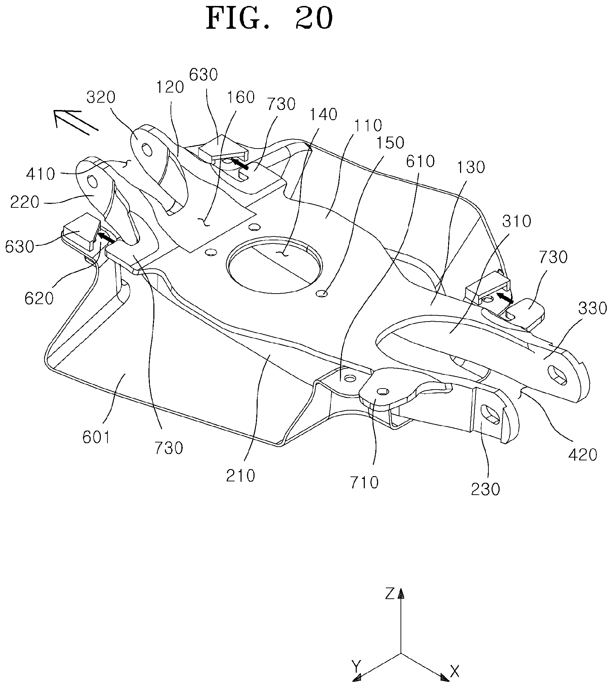

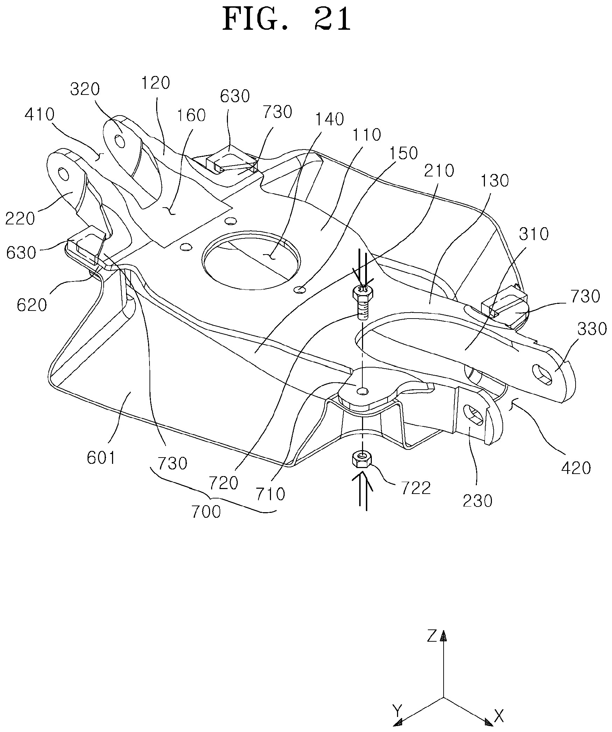

FIGS. 20 and 21 are diagrams schematically illustrating an assembly process of the undercover according to another embodiment of the present disclosure.

Referring to FIGS. 20 and 21, first, the end of the second flange body 732 is disposed to face the opening 631 in the first direction in the state in which the fastening member 700 has been separated from the undercover 600.

Thereafter, as the plate 100 is moved in the first direction, the second flange body 732 is inserted into the slot 630 through the opening 631.

In this process, the second flange bodies 732 of the plurality of insert flanges 730 may be inserted into the slots 630 simultaneously.

As the second flange body 732 is inserted into the slot 630, the fixing flange 710 is disposed to face the first seating part 610, and may be seated on the first seating part 610.

Thereafter, the flange fixing member 720 is combined with the first seating part 610 and the fixing flange 710. Accordingly, a relative movement between the plate 100 and the undercover 600 can be fully constrained.

Although exemplary embodiments of the disclosure have been disclosed for illustrative purposes, those skilled in the art will appreciate that various modifications, additions and substitutions are possible, without departing from the scope and spirit of the disclosure as defined in the accompanying claims. Thus, the true technical scope of the disclosure should be defined by the following claims.

## Claims

1. A lower arm assembly:
a plate that extends along a first axis;
a first leg connected to a bottom surface of the plate; and
a second leg connected to the bottom surface of the plate and disposed symmetrically to the first leg in relation to the first axis.

2. The lower arm assembly of claim 1, wherein the plate comprises:
a first plate disposed in parallel to the first axis;
a second plate extended from one end of the first plate and slantly disposed upward with respect to the first axis; and
a third plate extended from the other end of the second plate and slantly disposed upward with respect to the first axis.

3. The lower arm assembly of claim 2, wherein the first leg comprises:
a first central part connected to the first plate;
a first outer connection part connected to the second plate; and
a first inner connection part connected to the third plate,
wherein the second leg comprises:
a second central part connected to the first plate and disposed in parallel to the first central part;
a second outer connection part connected to the second plate and disposed in parallel to the first outer connection part; and
a second inner connection part connected to the third plate and disposed in parallel to the first inner connection part.

4. The lower arm assembly of claim 3, wherein each of an interval between the first outer connection part and the second outer connection part and an interval between the first inner connection part and the second inner connection part is smaller than an interval between the first central part and the second central part.

5. The lower arm assembly of claim 3 or 4, wherein the first leg comprises:
a first outer extension part disposed between the first central part and the first outer connection part; and
a first inner extension part disposed between the first central part and the first inner connection part, and
the second leg comprises:
a second outer extension part disposed between the second central part and the second outer connection part; and
a second inner extension part disposed between the second central part and the second inner connection part.

6. The lower arm assembly of claim 5, further comprising:
an outer recess configured to penetrate the second plate and disposed between the first leg and the second leg; and
an inner recess configured to penetrate the third plate and disposed between the first leg and the second leg.

7. The lower arm assembly of any one of claims 2 to 6, further comprising a spring pad connected to a top surface of the first plate,
wherein the plate further comprises an insertion hole that penetrates the first plate, and
the spring pad comprises:
a first pad body seated on the top surface of the first plate; and
a second pad body extended from the first pad body and inserted into the insertion hole.

8. The lower arm assembly of claim 7, wherein:
the plate further comprises a fixing hole configured to penetrate the first plate and spaced apart from the insertion hole, and
the spring pad further comprises a fixing member extended from the first pad body and inserted into the fixing hole.

9. The lower arm assembly of claim 8, wherein:
a central axis of the insertion hole and the first axis perpendicularly intersect at a crossing,
the fixing hole comprises:
a first fixing hole disposed on the first axis; and
a plurality of second fixing holes spaced apart from the first fixing hole in a cylindrical direction centering around the crossing.

10. The lower arm assembly of claim 9, wherein the fixing member comprises:
a first fixing member extended from the first pad body and inserted into the first fixing hole; and
a second fixing member extended from the first pad body and inserted into the second fixing hole,
wherein the first fixing member comprises:
a first fixing body extended from a bottom surface of the first pad body; and
a first hook disposed at an end of the first fixing body and configured to come into contact with the bottom surface of the first plate.

11. The lower arm assembly of any one of claims 1 to 10, further comprising:
an undercover disposed under the plate and configured to cover the first leg and the second leg; and
a fastening member configured to connect the plate and the undercover.

12. The lower arm assembly of claim 11, wherein the undercover comprises:
a cover body disposed to face the bottom surface of the plate and spaced apart from the plate; and
a first seating part configured to protrude from the cover body to the plate, and
the fastening member comprises:
one or more fixing flanges configured to extend from the plate and to come into contact with the first seating part; and
a flange fixing member configured to fix the fixing flange to the first seating part.

13. The lower arm assembly of claim 12, wherein the undercover further comprises:
a second seating part configured to protrude from the cover body to the plate and spaced apart from the first seating part; and
a slot disposed on the second seating part, and
the fastening member further comprises one or more insert flanges each configured to extend from the plate and inserted into the slot.

14. The lower arm assembly of claim 13, wherein:
the slot comprises an opening disposed perpendicularly to the first direction, and
the insert flange is inserted into the slot through the opening as the plate is moved in the first direction.

15. The lower arm assembly of claim 14, wherein the slot further comprises a stopper spaced apart from the opening in the first direction and disposed to face an end of the insert flange.
